# FASCICULE DE BREVET EUROPEEN

(11) **EP 0 430 760 B1**
(45) Date de publication et mention de la délivrance du brevet: **29.12.1993**
(21) Numéro de dépôt: 90403264.6
(22) Date de dépôt: 20.11.1990
(51) Int. Cl.: B60Q 1/06

(54) **Dispositif de commande du déplacement d'un organe mobile, notamment pour l'orientation des projecteurs d'éclairage d'un véhicule automobile**
Einrichtung zur Steuerung eines verstellbaren Teils, insbesondere zur Einstellung von Scheinwerfern eines Fahrzeuges
Device for controlling the displacement of a mobile organ, particularly the orientation of vehicle headlights

(30) Priorité: 22.11.1989 FR 8915307
(43) Date de publication de la demande: 05.06.1991
(73) Titulaire: VALEO ELECTRONIQUE, 78960 Voisins-Le-Bretonneux (FR)
(72) Inventeur: Iacovella, Rocco, F-94400 Vitry (FR)
(74) Mandataire: Gamonal, Didier

(56) Documents cités:
- DE-A- 3 807 731
- GB-A- 1 508 573

## Description

La présente invention concerne d'une façon générale, un dispositif de commande du déplacement d'un organe mobile, par exemple pour orienter les projecteurs d'éclairage d'un véhicule automobile.

Pour assurer au conducteur la meilleure visibilité et pour éviter l'éblouissement du conducteur d'un véhicule venant en sens inverse, il est souhaitable de pouvoir régler l'orientation des projecteurs en fonction, notamment, de la charge du véhicule.

On a déjà proposé de nombreux dispositifs permettant d'obtenir des corrections automatiques, mais ces systèmes sont en général d'une réalisation relativement coûteuse et d'une mise en oeuvre délicate.

On a également déjà décrit des dispositifs non automatiques permettant l'orientation manuelle des projecteurs, ces dispositifs de réglage comportant un nombre limité de positions de correction prédéterminées.

Le choix entre les positions de correction est laissé à l'initiative de l'utilisateur par la manoeuvre d'un commutateur placé à l'intérieur de l'habitacle du véhicule.

La liaison entre le commutateur de sélection et les projecteurs peut mettre en oeuvre des moyens mécaniques mais ceux-ci nécessitent la mise en place d'une tringlerie ou de câbles qui sont gênants dans le compartiment moteur. D'autres organes mobiles peuvent ainsi être télécommandés depuis l'habitacle. Dans la suite de la description, on a décrit le cas de l'orientation des phares.

D'autres dispositifs remplacent les moyens mécaniques de liaison par des moyens électriques, lesdits moyens étant généralement constitués de plusieurs fils électriques reliant le commutateur de sélection aux actionneurs des projecteurs comprenant notamment chacun un moteur à courant continu à deux sens de rotation, relié mécaniquement au projecteur et relié électriquement au commutateur de sélection par un ensemble électronique situé en général dans l'actionneur.

Le fonctionnement de tels dispositifs repose sur le principe de la comparaison entre des seuils de tension de consigne générés par le commutateur de sélection et des tensions de réglage internes aux actionneurs : lorsque l'équilibre électrique est atteint, c'est-à-dire lorsqu'il y a coïncidence entre les valeurs tension de consigne et tension de réglage, le mouvement du moteur s'arrête.

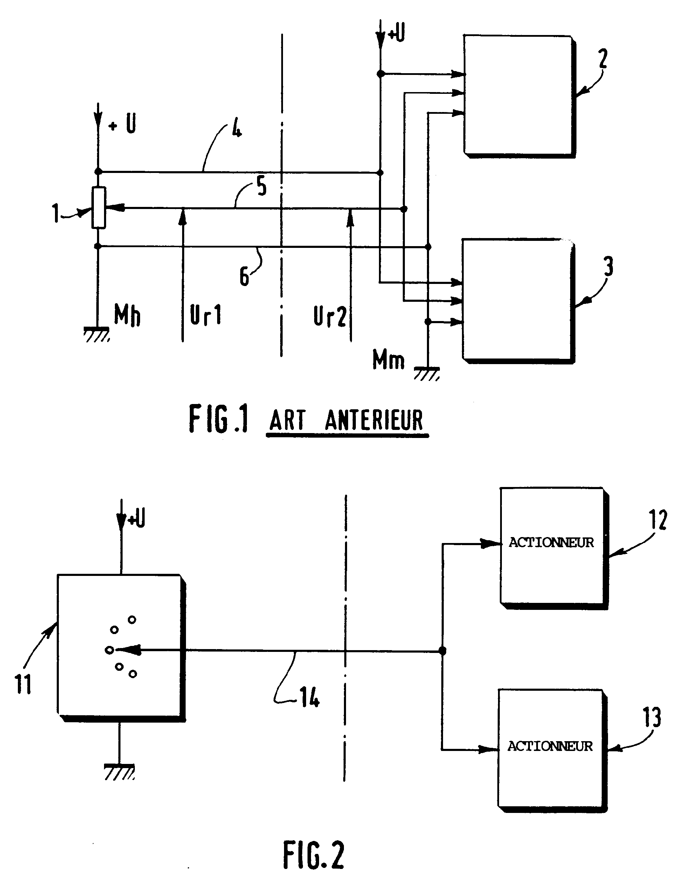

Le câblage d'un tel dispositif est représenté schématiquement sur la figure 1, sur laquelle un commutateur de sélection 1 est relié électriquement à deux actionneurs 2 et 3 par trois fils électriques 4,5 et 6.

Le commutateur de sélection 1, peut être associé à un potentiomètre ou un pont diviseur à résistances.

Le bon fonctionnement d'un tel dispositif n'est assuré que si les perturbations qui affectent les valeurs tension de consigne et tension de réglage restent faibles. Or le commutateur de sélection 1 est installé dans le poste de conduite du véhicule tandis que les actionneurs 2,3 sont installés dans la partie moteur.

Il en résulte que la tension de consigne U mesurée par rapport à la masse habitacle Mh est différente de la tension de consigne Ur2 mesurée par rapport à la masse moteur Mm. Cet écart de valeur est préjudiciable au bon fonctionnement du système, puisque le signal reçu par l'actionneur est différent du signal émis par le commutateur de sélection.

Pour éliminer cet inconvénient, on est obligé, comme représenté à la figure 1 d'établir une liaison électrique comportant trois fils, le fil correspondant à la tension d'alimentation + U, le fil 5 correspondant à la tension de consigne, et le fil 6 correspondant à la masse.

Dans le document DE-A-38 07 731, un dispositif de commande et un dispositif de positionnement, comportant chacun un générateur de fréquences, échangent des données sous forme de séries d'impulsions par l'intermédiaire d'une ligne référencée à la masse électrique. Un potentiomètre de signalisation en retour permet en effet d'informer le dispositif de commande de la position réelle prise par le dispositif de positionnement.

Cependant, un tel système exige au moins trois canaux :
- un fil de liaison de données impulsionnelles ;
- un fil de liaison à un potentiel positif ;
- un fil d'alimentation à un potentiel négatif ;

ces deux derniers fils étant reliés à une source d'énergie comme la batterie embarquée à bord du véhicule.

De plus, la présence de deux générateurs de fréquences de chaque côté du fil de liaison de données impulsionnelles entraîne une complication des échanges de données qui sont bidirectionnels.

L'un des buts de la présente invention est de proposer un dispositif de commande qui ne soit pas affecté par les écarts de tension qui existent entre l'habitacle et le moteur.

C'est un autre but de l'invention, quelque soit le flux d'énergie transmis aux moyens moteurs du déplacement de l'organe mobile télécommandé, de réduire le nombre de canaux de transmission ou fils de liaison.

A cet effet, la présente invention propose un dispositif de commande du déplacement d'au moins un organe mobile, notamment pour l'orientation des projecteurs d'éclairage d'un véhicule, comprenant un commutateur de sélection et une alimentation électrique distants de l'organe mobile, l'organe mobile étant déplacé par des moyens moteurs comme un moteur électrique, un circuit d'activation connecté à une source d'énergie respectivement une source de tension électrique, destinée notamment à fournir un flux d'énergie aux moyens moteurs, le circuit d'activation comportant des moyens pour produire un signal de commande porteur de l'information de déplacement, caractérisé en ce qu'il comporte aussi des moyens pour superposer le signal de commande au flux d'énergie destiné aux moyens moteurs comme par des moyens d'alimentation électrique, et en ce qu'il comporte aussi un circuit de réception, relié par un canal unique transportant à la fois le flux d'énergie nécessaire à l'activation du déplacement de l'organe mobile et le signal de commande, ledit circuit de réception comportant un circuit séparant le signal de commande du flux d'énergie, respectivement de la tension d'alimentation électrique, ledit signal de commande étant fourni à l'entrée d'un circuit de pilotage du déplacement de l'organe mobile.

De manière préférentielle, les signaux représentatifs de la position du commutateur de sélection ne sont plus une fonction de la tension, mais une fonction du temps.

On appréciera en particulier la simplification de la liaison électrique entre le commutateur de présélection et les actionneurs, puisque celle-ci s'effectue avec un seul canal de transmission au fil.

L'alimentation de l'ensemble du dispositif s'effectuant uniquement au niveau du commutateur de présélection dans l'habitacle, son fonctionnement n'est plus altéré par les variations de tension.

D'autres caractéristiques et avantages de l'invention apparaîtront à la lecture de la description détaillée qui suit et qui est faite en référence aux dessins annexés dans lesquels :
- la figure 1 déjà décrite représente un schéma synoptique des liaisons électriques entre commutateur de présélection et actionneurs suivant l'Art Antérieur ;
- la figure 2 représente un schéma synoptique des mêmes liaisons électriques selon l'invention ;
- la figure 3 représente un bloc diagramme d'un exemple de réalisation du dispositif selon l'invention ;
- la figure 4 représente un diagramme des signaux de commande relatifs à deux modes de réalisation.

On se réfère à la figure 2 qui illustre schématiquement un dispositif d'orientation des projecteurs d'un véhicule automobile comprenant un commutateur de sélection 11 installé dans l'habitacle et pour chaque projecteur un actionneur 12,13.

Suivant l'invention, la liaison électrique entre les actionneurs 12,13 et le commutateur de sélection 11 s'effectue par un seul fil 14 sur lequel on superpose les moyens d'alimentation et de commande des actionneurs 12,13.

Dans cette configuration l'ensemble est alimenté par une tension U à partir du commutateur de sélection 11.

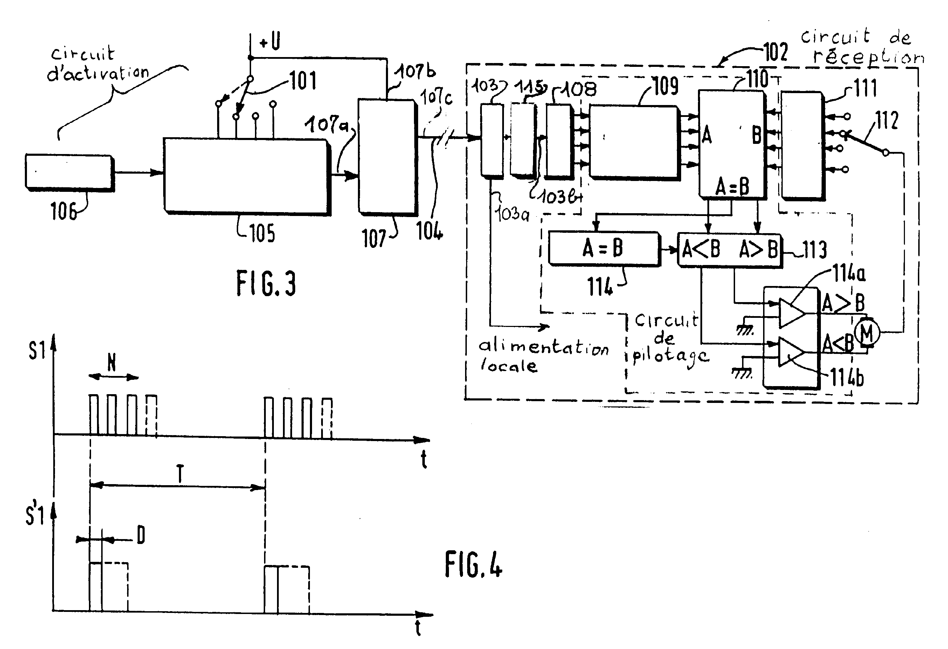

On se réfère maintenant à la figure 3, qui représente le bloc diagramme d'un exemple de réalisation d'un dispositif selon l'invention.

A l'intérieur de l'habitacle (partie gauche de la figure) est installé un circuit d'activation qui permet à la fois de fournir l'énergie nécessaire au moins au déplacement de l'organe mobile (non représenté) et distant, d'une part, et de générer le signal de commande ou de consigne destiné à l'actionneur de cet organe, d'autre part. Le circuit d'activation comporte notamment un commutateur de sélection 101 dont le curseur est alimenté à partir d'une tension + U. Dans l'exemple représenté, le commutateur de sélection 101 permet quatre orientations différentes des projecteurs. Les bornes correspondant à ces quatre positions sont reliées à un générateur 105 du signal de commande 51 piloté par une horloge 106. La sortie du générateur de commande est reliée à un circuit de mise en forme 107.

L'ensemble comprenant l'horloge 106, le générateur d'impulsions 105 et l'étage de mise en forme 107 constitue l'ensemble générateur de signaux représentatifs de la position du commutateur de sélection 101.

La forme des signaux émis en entrée du circuit de mise en forme 107 a été représentée en S1 sur le diagramme de la figure 4.

Ces signaux S1 se présentent sous la forme d'impulsions émises à une fréquence 1/T par l'horloge 106. L'encodeur 105 de la position du curseur du commutateur 101 est activé par la manoeuvre de ce dernier et fournit en réponse un nombre N d'impulsions, fonction de la position de ce curseur. Dans un mode préféré, cette fonction est une fonction proportionnelle à la position du commutateur de sélection 101. Dans un cas particulier, la suite des N impulsions peut être répétée indéfiniment ou un nombre prédeterminé de fois de façon à éviter les erreurs de transmission.

En pratique, l'encodeur 105 comporte aussi un compteur qui est chargé à la valeur N détectée, puis qui décompte cette valeur N au rythme de l'horloge 106 jusqu'à zéro. Ceci permet de générer N impulsions constituant un signal de commande S1.

Dans l'exemple choisi, l'encodeur 105 détecte à son entrée 105a que le commutateur 101 est sur la troisième position. Il génère trois impulsions. La quatrième position du commutateur de sélection 101, représentée en pointillés, correspondrait à l'émission de quatre impulsions successives. Les impulsions sont calibrées par l'horloge 106.

Le signal S1 de sortie du générateur 105 est fourni à l'entrée du circuit de mise en forme 107. Dans un premier mode de réalisation, le circuit 107 est principalement constitué par un élément de commutation ou interrupteur commandable dont une première borne 107b est connectée à l'alimentation générale +U et une seconde borne 107c est connectée à la ligne 104.

L'électrode de commande 107a de l'interrupteur 107 est connectée à la sortie de l'encodeur 105 au signal de commande 51. Le circuit 107 émet donc en permanence de l'énergie électrique à la tension +U en fonction des demandes sur la ligne 104, mais interrompt l'alimentation selon le signal S1.

Suivant l'invention, la liaison entre l'ensemble générateur de signaux ou circuit d'activation et chacun des actionneurs est réalisée par un seul canal de transmission d'énergie ou ligne électrique 104.

Pour simplifier le dessin, un seul actionneur a été représenté sous le repère global 102.

Il va de soi qu'un dispositif complet comporte deux actionneurs identiques associés chacun à un projecteur d'éclairage et à un circuit de réception selon l'invention.

Sur le récepteur ou circuit de réception 102, un premier circuit 103, dit séparateur, sépare le signal de commande S1 de la tension d'alimentation. Le séparateur 103 comporte donc une première sortie 103a, qui constitue l'alimentation électrique locale du circuit de réception 102 et éventuellement d'autres circuits. Dans le cas où les impulsions ou signaux porteurs de l'information de commande sont d'énergie très faible, la sortie 103a est reliée directement à l'entrée du séparateur, éventuellement avec un redresseur (filtre) et/ou un régulateur de tension.

Dans un premier mode de réalisation où les signaux porteurs d'information sont constitués par des impulsions, le séparateur 103 est connecté aussi à un détecteur d'impulsion 115 sur la ligne 104. Ce détecteur peut être un détecteur de front montant, de front descendant, ou encore une combinaison des deux (compteur). Le signal de sortie 103b du séparateur 103 est identique au signal S1 à la sortie du générateur d'impulsions 105.

Dans un autre mode de réalisation, le circuit 107 de mise en forme comporte un additionneur qui ajoute la tension des impulsions (par exemple de 5 Volts) à la tension continue +U d'alimentation du circuit de commande (par exemple de 24 Volts). Dans ce cas, le circuit 107 est un additionneur de tension, bien connu de l'homme de métier. Le séparateur 103 comporte alors un détecteur d'impulsion par exemple constitué par un soustracteur dont une première entrée reçoit la tension +U convenablement filtrée de la sortie 103a par exemple, et une seconde entrée reçoit la tension variable venant de la ligne 104. La sortie du soustracteur est alors connectée à la sortie 103b du séparateur 103.

Dans un troisième mode de réalisation, le circuit 107 est un modulateur qui reçoit la tension continue +U d'alimentation sur une première entrée 107b et le signal impulsionnel S1 sur une seconde entrée 107a. La sortie 107c du circuit 107 est connectée au canal de transmission d'énergie 104.

Le temps disponible entre chaque train d'impulsions permet l'alimentation de l'ensemble électronique de chaque actionneur.

Le circuit 115, après le séparateur 103 du signal de commande transmis sur l'alimentation, est connecté aussi à un compteur électronique 108 dont l'entrée reçoit le train d'impulsions représentatif de l'information de position provenant de la sortie 103b et dont la sortie émet vers l'entrée d'un module de mémorisation 109 un code binaire correspondant au nombre d'impulsions N et donc à la position choisie du commutateur de sélection 101.

La sortie du module de mémorisation 109 adresse ce même code binaire à l'une des entrées d'un comparateur numérique 110 dont l'autre entrée reçoit, également sous forme de code binaire la sortie d'un encodeur 111. L'encodeur 111 reçoit sur son entrée des signaux correspondant à la position d'un curseur 112, ledit curseur étant relié mécaniquement à un moteur électrique M à courant continu à deux sens de rotation. Ce moteur M est également relié mécaniquement à l'organe d'orientation du projecteur d'éclairage qui, ne faisant pas partie de la présente invention, n'a pas été représenté. Le curseur 112 et par conséquent la sortie de l'encodeur 111 est donc l'image de l'orientation des projecteurs.

Le comparateur numérique 110 reçoit donc, d'une part, la valeur de consigne A et la valeur mesurée B et présente à sa sortie trois informations correspondant respectivement à l'égalité A = B et aux inégalités A<B et A>B.

Tant que le projecteur n'occupe pas l'orientation sélectionnée, le comparateur numérique émet l'une des informations d'inégalité A<B ou A>B. Cette information est mémorisée dans un module 113, puis adressée à l'un des interfaces de puissance 114a,114b. Suivant l'information d'inégalité existante, les interfaces de puissance 114a,114b font tourner le moteur M dans un sens ou dans l'autre jusqu'à ce que le projecteur soit dans l'orientation désirée c'est-à-dire jusqu'à ce que l'égalité A=B soit réalisée.

Cette information est transmise à un module 114 qui annule la commande du moteur M par le module 113.

Dans l'exemple de réalisation décrit ci-dessus, les signaux représentatifs de la position du commutateur de sélection sont constitués d'impulsions émises à une fréquence 1/T (ou de période T) et dont le nombre N est proportionnel à la position du commutateur de sélection.

Il va de soi que ces signaux de commande peuvent avoir une forme différente sans sortir du cadre de la présente invention. En particulier, l'information de commande est une modulation en largeur d'impulsion. La largeur d'impulsion est alors une fonction de la position du commutateur de sélection 111. Dans un exemple préféré de réalisation, cette fonction est une fonction proportionnelle. Dans ce cas, le signal de commande peut être constitué par au moins une impulsion émise à une fréquence 1/T dont la durée D (D<T) est proportionnelle à la position du commutateur de sélection 101.

De telles impulsions ont été représentées en S'1 sur la figure 4. Dans ce cas le compteur électronique 108 est remplacé par un convertisseur durée/digital.

Dans l'exemple décrit, le nombre N ou la durée D sont proportionnels à la position du commutateur de sélection 101, en fait leurs valeurs peuvent être une fonction quelconque de la position dudit commutateur.

De même on ne sortira pas du cadre de la présente invention si les signaux de commande se présentent sous la forme d'une tension alternative dont la fréquence est proportionnelle à la position du commutateur de sélection. Cette tension alternative est générée par un oscillateur à fréquence variable remplaçant l'horloge 106 et le générateur d'impulsions 105, l'étage de mise en forme 107 pouvant être avantageusement remplacé par un transformateur qui induira une ondulation superposée au courant d'alimentation.

Enfin l'actionneur 102 représenté comporte un asservissement numérique qui peut être remplacé par un asservissement analogique.

## Revendications

1. Dispositif de commande du déplacement d'au moins un organe mobile, notamment pour l'orientation des projecteurs d'éclairage d'un véhicule, comprenant un commutateur de sélection (11,101) et une alimentation électrique (+U) distants de l'organe mobile, l'organe mobile étant déplacé par des moyens moteurs comme un moteur électrique (M), un circuit d'activation (105-107) connecté à une source d'énergie, respectivement une source de tension électrique (+U), destinée notamment à fournir un flux d'énergie aux moyens moteurs (M), le circuit d'activation (105-107) comportant des moyens (105) pour produire un signal de commande porteur de l'information de déplacement, caractérisé en ce qu'il comporte aussi des moyens (107) pour superposer le signal de commande au flux d'énergie destiné aux moyens moteurs comme la tension générée par des moyens d'alimentation électrique, et en ce qu'il comporte aussi un circuit de réception (102), relié par un canal unique (104) transportant à la fois le flux d'énergie nécessaire à l'activation du déplacement de l'organe mobile et le signal de commande, ledit circuit de réception (102) comportant un circuit (103) séparant le signal de commande du flux d'énergie, respectivement de la tension (+U) d'alimentation électrique, ledit signal de commande étant fourni à l'entrée d'un circuit de pilotage (109-114) du déplacement de l'organe mobile.

2. Dispositif de commande selon la revendication 1, caractérisé en ce que le signal de commande est constitué par une succession d'impulsions produites par une horloge (106) et en ce que l'information de déplacement est constituée par un nombre N d'impulsions qui est une fonction de la position du commutateur de sélection (101), ladite fonction pouvant être proportionnelle à ladite position ou en ce que l'information de déplacement est une modulation de largeur (D) sur au moins une impulsion, largeur (D) qui est une fonction de la position du commutateur de sélection (101), ladite fonction pouvant être proportionnelle à ladite position du commutateur de sélection (101).

3. Dispositif de commande selon la revendication 2, caractérisé en ce que le circuit de mise en forme (107) comporte un élément de commmutation dont l'électrode de commande est activé par le signal de commande émis par le générateur (105) de telle sorte que l'alimentation électrique (+U) connectée à une première borne (107a) de l'élément de commutation, est interrompue de manière impulsionnelle sur la ligne (104) connectée à une seconde borne (107c) du circuit de mise en forme (107).

4. Dispositif de commande selon la revendication 2, caractérisé en ce que le circuit de mise en forme (107) comporte un additionneur de tension qui ajoute chaque tension d'impulsion à la tension d'alimentation (+U) et la sortie de l'additionneur étant connectée à la ligne (104).

5. Dispositif de commande selon la revendication 2, caractérisé en ce que le circuit de mise en forme comporte un modulateur qui reçoit la tension continue (+U) d'alimentation sur une première entrée (107b) et le signal impulsionnel (S1) sur une seconde entrée (107a), la sortie (107c) du circuit (107) étant connectée au canal de transmission d'énergie (104).

6. Dispositif selon la revendication 1, caractérisé en ce que le signal de commande est constitué par une tension analogique comme une tension alternative produit par un oscillateur à fréquence variable, et en ce que l'information de déplacement est constituée par la fréquence qui est fonction de la position du commutateur de sélection (101), ladite fonction pouvant être proportionnelle à ladite position.

7. Dispositif de commande selon la revendication 6, cractérisé en ce que le circuit de mise en forme (107) comporte une transformateur pour induire une ondulation superposée au courant d'alimentation.

8. Dispositif de commande selon la revendiction 1, caractérisé en ce que le circuit séparateur (103) comporte un redresseur ou filtre et/ou un régulateur de tension dont la sortie (103a) est connectée aux bornes d'alimentation électrique desservies.

9. Dispositif selon la revendication 8 et 2, caractérisé en ce que le circuit séparateur comporte de plus un détecteur d'impulsions dont la sortie (103a) est connectée à un circuit de pilotage de l'organe mobile ou actionneur (102).

10. Dispositif selon la revendication 9, caractérisé en ce que le circuit de pilotage comporte un compteur d'impulsions (108) dont l'entrée est connectée à la sortie (103b) du détecteur d'impulsions du séparateur (103), et dont la sortie est connectée à l'entrée d'un registre (109) dont la sortie est fournie à la première entrée d'un comparateur (110) dont une seconde entrée est connectée à un encodeur (111) de position de l'organe mobile, position mesurée par un capteur de position (112), une sortie dudit comparateur étant connectée à un circuit (113) de mémorisation d'une information de non égalité entre le signal de commande fourni à la première entrée du comparateur (110) et le signal de mesure de position fourni à la seconde entrée du comparateur (110), ladite information de non égalité étant reçue par l'entrée de commande d'un interface de puissance (114a,114b) destinée à alimenter les moyens moteurs (M), de déplacement de l'organe mobile.

## Patentansprüche

1. Einrichtung zur Steuerung wenigstens eines verstellbaren Teils, insbesondere zur Einstellung von Scheinwerfern eines Fahrzeugs, enthaltend einen Wahlschalter (11, 101) und eine Stromquelle (+U), die einen Abstand zum verstellbaren Teil aufweisen, wobei das verstellbare Teil durch Antriebsmittel wie einen Elektromotor (M) bewegt wird, einen Aktivierungskreis (105-107), der an eine Stromquelle angeschlossen ist, bzw. eine Spannungsquelle (+U), die insbesondere dazu bestimmt ist, den Antriebsmitteln (M) einen Energiestrom zuzuführen, wobei der Aktivierungskreis (105-107) Mittel (105) zur Erzeugung eines die Verschiebungsinformation tragenden Steuersignals enthält, **dadurch** **gekennzeichnet**, daß sie auch Mittel (107) aufweist, um das Steuersignal dem Energiestrom zu überlagern, der als durch die Stromzuleitungsmittel erzeugte Spannung für die Antriebsmittel bestimmt ist, und daß sie auch einen Empfangskreis (102) enthält, der über einen einzigen Kanal (104) angeschlossen ist, der gleichzeitig den für die Aktivierung der Verschiebung des verstellbaren Teils erforderlichen Energiestrom und das Steuersignal transportiert, wobei der genannte Empfangskreis (102) einen Stromkreis (103) einschließt, der das Steuersignal vom Energiestrom bzw. von der Speisespannung (+U) trennt, wobei das genannte Steuersignal am Eingang eines Pilotkreises (109-114) für die Verschiebung des verstellbaren Teils zugeführt wird.

2. Steuerungseinrichtung nach Anspruch 1, **dadurch gekennzeichnet**, daß das Steuersignal aus einer Folge von durch einen Taktgeber (106) erzeugten Impulsen besteht und daß die Verschiebeinformation aus einer Anzahl von N Impulsen besteht, die eine Funktion der Stellung des Wahlschalters (101) ist, wobei die genannte Funktion sich zur genannten Position proportional verhalten kann, oder daß die Verschiebeinformation eine Breitenmodulation (D) an wenigstens einem Impuls ist, wobei die Breite (D) eine Funktion der Stellung des Wahlschalters (101) ist und die genannte Funktion zur genannten Stellung des Wahlschalters (101) proportional sein kann.

3. Steuerungseinrichtung nach Anspruch 2, **dadurch gekennzeichnet**, daß der Impulsformer (107) ein Schaltelement enthält, dessen Steuerelektrode durch das vom Generator (105) ausgesandte Steuersignal so aktiviert wird, daß die an einer ersten Klemme (107a) des Schaltelements anliegende Speisespannung (+U) impulsartig an der Leitung (104) unterbrochen wird, die an eine zweite Klemme (107c) des Impulsformers (107) angeschlossen ist.

4. Steuerungseinrichtung nach Anspruch 2, **dadurch gekennzeichnet,** daß der Impulsformer (107) einen Spannungsaddierer enthält, der jede Impulsspannung der Speisespannung (+U) hinzufügt, und wobei der Ausgang des Spannungsaddierers an die Leitung (104) angeschlossen ist.

5. Steuerungseinrichtung nach Anspruch 2, **dadurch gekennzeichnet**, daß der Impulsformer einen Modulator enthält, der die Speisegleichspannung (+U) an einem ersten Eingang (107b) und das Impulssignal (S1) an einem zweiten Eingang (107a) empfängt, wobei der Ausgang (107c) des Stromkreises (107) an den Energieübertragungskanal (104) angeschlossen ist.

6. Einrichtung nach Anspruch 1, **dadurch** **gekennzeichnet**, daß das Steuersignal aus einer Analogspannung wie einer Wechselspannung besteht, die durch einen Oszillator mit veränderlicher Frequenz erzeugt wird, und daß die Verschiebeinformation aus der Frequenz besteht, die eine Funktion der Stellung des Wahlschalters (101) ist, wobei die genannte Funktion sich proportional zur genannten Position verhalten kann.

7. Steuerungseinrichtung nach Anspruch 6, **dadurch gekennzeichnet**, daß der Impulsformer (107) einen Transformator zur Erzeugung einer dem Speisestrom überlagerten Welligkeit enthält.

8. Steuerungseinrichtung nach Anspruch 1, **dadurch gekennzeichnet**, daß die Trennstufe (101) einen Gleichrichter oder Filter und/oder einen Spannungsregler enthält, dessen Ausgang (103a) an die gesteuerten Speisestromklemmen angeschlossen ist.

9. Einrichtung nach Anspruch 8 und 2, **dadurch gekennzeichnet**, daß die Trennstufe außerdem einen Impulsdetektor enthält , dessen Ausgang (103a) an einen Pilotkreis des verstellbaren Teils oder der Betätigungsvorrichtung (102) angeschlossen ist.

10. Einrichtung nach Anspruch 9, **dadurch** **gekennzeichnet**, daß der Pilotkreis einen Impulszähler (108) enthält, dessen Eingang an den Ausgang (103b) des Impulsdetektors der Trennstufe (103) angeschlossen ist und dessen Ausgang an den Eingang eines Registers (109) angeschlossen ist, dessen Ausgang dem ersten Eingang eines Komparators (110) zugeführt wird, dessen zweiter Eingang mit einem Wegcodierer (111) des verstellbaren Teils verbunden ist, wobei diese Position durch einen Weggeber (112) gemessen wird, während ein Ausgang des genannten Komparators an einen Stromkreis (113) zur Speicherung einer Nichtgleichheitsinformation zwischen dem am ersten Eingang des Komparators (110) anliegenden Steuersignal und dem am zweiten Eingang des Komparators (110) anliegenden Meßsignal angeschlossen ist, während die genannte Nichtgleichheitsinformation über den Steuereingang einer Leistungsschnittstelle (114a, 114b) empfangen wird, der zur Versorgung der Antriebsmittel (M) für die Verschiebung des verstellbaren Teils bestimmt ist.

## Claims

1. Apparatus for controlling the displacement of at least one movable member, especially for the orientation of the headlamps of a vehicle, comprising a selection switch (11, 101) and an electrical supply (+U), both of which are remote from the movable member, the movable member being displaced by motor means such as an electric motor (M), characterised in that it includes an activation circuit (105 - 107) connected to a source of energy, namely a source of electrical voltage (+U), adapted in particular for supplying a flow of energy to the motor means (M), the activating circuit (105 - 107) also including means (105) for producing a control signal carrying displacement information, in that it also includes means (107) for superimposing the control signal on the energy flow for the motor means, such as the voltage generated by the electrical supply means, and in that it further includes a reception circuit (102), connected through a single channel (104) which carries at the same time the energy flow necessary for actuating the displacement of the movable member and the control signal, the said reception circuit (102) including a circuit (103) which separates the control signal from the energy flow, namely the electrical supply voltage (+U), the said control signal being applied to the input of a control circuit (109 - 114) for controlling the displacement of the movable member.

2. A control apparatus according to Claim 1, characterised in that the control signal comprises a succession of pulses produced by a clock (106), and in that the displacement information comprises a number N of pulses which is a function of the position of the selection switch (101), the said function being able to be proportional to the said position, or in that the displacement information is a modulation of pulse width (D) on at least one pulse, the said width (D) being a function of the position of the selection switch (101), the said function being able to be proportional to the said position of the selection switch (101).

3. A control apparatus according to Claim 2, characterised in that the shaping circuit (107) includes a switching element, the control electrode of which is activated by the control signal emitted by the generator (105), in such a way that the electrical supply (+U) connected to a first terminal (107a) of the switching element is interrupted in a pulsed manner on the line (104) which is connected to a second terminal (107c) of the shaping circuit (107).

4. Control apparatus according to Claim 2, characterised in that the shaping circuit (107) includes a voltage adder, which adds each pulse voltage to the supply voltage (+U), with the output of the adder being connected to the line (104).

5. Control apparatus according to Claim 2, characterised in that the shaping circuit includes a modulator which receives the unidirectional supply voltage (+U) on a first input (107b) and the pulse signal (S1) on a second input (107a), the output (107c) of the circuit (107) being connected to the energy transmission channel (104).

6. Apparatus according to Claim 1, characterised in that the control signal comprises an analog voltage, such as an alternating voltage, produced by a variable frequency oscillator, and in that the displacement information comprises the frequency which is a function of the position of the selection switch (101), the said function being able to be proportional to the said position.

7. Control apparatus according to Claim 6, characterised in that the shaping circuit (107) includes a transformer for inducing a waveform superimposed on the supply current.

8. Control apparatus according to Claim 1, characterised in that the separating circuit (103) comprises a rectifier or filter and/or a voltage regulator, the output (103a) of which is connected to the subordinate electrical supply terminals.

9. Apparatus according to Claim 8 and Claim 2, characterised in that the separating circuit further includes a pulse detector, the output (103a) of which is connected to a control circuit for the movable member or actuator (102).

10. Apparatus according to Claim 9, characterised in that the control circuit includes a pulse counter (108), the input of which is connected to the output (103b) of the pulse detector of the separator (103), with its output being connected to the input of a register (109), the output of which is supplied to the first input of a comparator (110), a second input of which is connected to an encoder (111) for encoding the position of the movable member, the said position being measured by a position sensor (112), an output of the said comparator being connected to a circuit (113) for memorising inequality information as between the control signal supplied to the first input of the comparator (110) and the position measuring signal supplied to the second input of the comparator (110), the said inequality information being received by the control input of a power interface (114a, 114b) for supplying the motor means (M), for displacement of the movable member.
